# EUROPÄISCHE PATENTSCHRIFT

(11) **EP 2 397 671 B1**
(45) Veröffentlichungstag und Bekanntmachung des Hinweises auf die Patenterteilung: **26.12.2012**
(21) Anmeldenummer: 10166084.3
(22) Anmeldetag: 16.06.2010
(51) Int. Cl.: F02C 3/28, F01K 23/06, F02C 6/18, F02C 7/30

(54) **Gas- und Dampfturbinenanlage und zugehöriges Verfahren**
Gas and steam turbine plant and corresponding process
Installation de turbines à gaz et à vapeur et procédé associé

(43) Veröffentlichungstag der Anmeldung: 21.12.2011
(73) Patentinhaber: SIEMENS AKTIENGESELLSCHAFT, 80333 München (DE)
(72) Erfinder: Schiffers, Ulrich, 90542, Eckental (DE); Keyser, Jens, 90766, Fürth (DE); Reimuth, Oliver, 91058, Erlangen (DE)

(56) Entgegenhaltungen:
- DE-C1- 19 832 294
- DE-C2- 10 002 084

## Beschreibung

Die Erfindung betrifft eine Gas- und Dampfturbinenanlage mit einer Vergasungseinrichtung für fossilen Brennstoff und einem entsprechenden Synthesegasbrennstoffsystem, sowie ein Verfahren zum Spülen des Synthesegasbrennstoffsystems einer solchen Anlage.

Die Aufgabe des Synthesegasbrennstoffsystems ist es, ein aus einer Vergasung eines Brennstoffs (z.B. Kohle) gewonnenes und anschließend gereinigtes Synthesegas zur Verbrennung in einer Gasturbine aufzubereiten (entsprechend den Gasturbinen-Anforderungen). Um das System ordnungsgemäß in Betrieb nehmen zu können und um Reparaturen nach Ausfällen/Störungen ordnungsgemäß durchführen zu können, besteht die Notwendigkeit, das System zu inertisieren.

In bekannten IGCC-Anlagen (IGCC = integrated gasification combined cycle, d.h. Gas- und Dampfturbinenanlagen mit integrierter Vergasung) wird die Inertisierung mit Hilfe des Spülmediums Dampf realisiert. Bei längeren Ausfallzeiten kann es allerdings dabei zur sogenannten Stillstandskorrosion kommen, verursacht durch den kondensierenden Dampf innerhalb der Rohrleitungen des Brennstoffsystems in Verbindung mit Schwefelverbindungen (im ppm-Bereich), die nicht innerhalb der Entschwefelungsanlage vom Synthesegasstrom abgetrennt werden konnten.

Zur Vermeidung dieses Problems wurde daher stromauf der Gasturbine ein Spülsystem mit Stickstoff (N₂), insbesondere Rein-Stickstoff, als Inertisierungsmittel vorgesehen, mit dem ab dem Gasschloss vorwärts in die Gasturbine gespült wird. Das Gasschloss umfasst zwei Armaturen, beispielsweise Kugelhähne. Zwischen diesen beiden Armaturen ist eine Zwischenentlastung oder eine Druckleitung angeschlossen. Die Zwischenentlastung kann an eine Fackel angeschlossen sein, über die überschüssiges Gas abgefackelt werden kann. Alternativ zu der Zwischenentlastung kann eine Druckleitung angeschlossen werden, die dafür sorgt, dass kein Gas über die Gasschlossarmaturen einströmen kann. Das Gasschloss trennt also, um den einschlägigen sicherheitstechnischen Vorschriften zu genügen, das Brennstoffsystem gasdicht in einen ersten Bereich (Vergasungssystem) stromauf des Gasschlosses und in einen zweiten Bereich (Gasturbinen-Brennstoffsystem) stromab des Gasschlosses.

Im Gegensatz zum Dampf, welcher in Verbindung mit Schwefel und Kondensation zu Korrosion führen kann, besteht die Gefahr der Korrosion bei Stickstoff nicht. Der Stickstoff fällt in der Luftzerlegungsanlage als Hoch-reiner Stickstoff an und kann somit zur Inertisierung des Brennstoffsystems genutzt werden. Dieses Konzept wurde bereits patentiert (Patent DE 10002084 C2).

Der vordere Bereich des Brennstoffsystems (d.h. stromauf des Gasschlosses und des Sättigersystems) wird hierbei nicht inertisiert. Soll dieser Bereich auch intertisiert werden, wird bei normalem Abfahren und Stillstand das System vom Vergaser mit Hochrein-Stickstoff inertisiert und der Bereich unter Druck gehalten. Bei einem Ausfall des Vergasersystems ist diese Art der Inertisierung allerdings nicht möglich.

Aufgabe der Erfindung ist daher die Angabe einer Gas- und Dampfturbinenanlage der oben genannten Art, bei der das Brennstoffsystem in besonders zuverlässiger Weise gespült werden kann. Außerdem soll ein Verfahren angegeben werden, welches zuverlässig und auf besonders einfache Weise eine Spülung des Brennstoffsystems der Gas- und Dampfturbinenanlage erlaubt.

Erfindungsgemäß wird diese Aufgabe gelöst durch die Vorrichtung gemäß Anspruch 1 und das Verfahren gemäß Anspruch 9. Vorteilhafte Weiterbildungen der Erfindung sind in den jeweiligen abhängigen Ansprüchen definiert. Indem bei einer Gas- und Dampfturbinenanlage mit integrierter Kohlevergasung, umfassend eine Gasturbine, ein einer Brennkammer der Gasturbine vorgeschaltetes Brennstoffsystem, das eine Vergasungseinrichtung für fossilen Brennstoff und eine von der Vergasungseinrichtung abzweigende und in die Brennkammer der Gasturbine mündende Gasleitung umfasst, wobei stromauf der Brennkammer ein Sättiger für das Aufsättigen des Brennstoffs mit Dampf in die Gasleitung geschaltet ist, eine Spülleitung vorgesehen ist, die zwischen Vergasungseinrichtung und Sättiger in die Gasleitung mündet, wird folgendes erreicht:
Bei Ausfall der Inertisierung mit Stickstoff über den Vergaser kann ein "Notspülen" des stromab angeordneten Brennstoffsystems aktiviert und über eine bestimmte Zeit durchgeführt werden. Hierdurch kann eine Inertisierung des Brennstoffsystems auch oberhalb des Gasschlosses erreicht werden.

Der Vorteil dieses Konzeptes liegt darin, dass eine Inertisierung des stromaufwärts liegenden Teils des Brennstoffsystems auch bei Ausfall der Inertisierung von der Vergaserseite sichergestellt werden kann. Man erreicht hierdurch eine vom Vergaser oder vorgelagerten Systemen unabhängige Inertisierung des Brennstoffsystems. Dieser Vorteil kann in sogenannten Poly-Generation-Anlagen zum Tragen kommen. Hier werden neben einer möglichen Stromproduktion über die Gasturbine noch zusätzliche Stoffe (z.B. SNG = Synthetic Natural Gas bzw. Substitute Natural Gas, Erdgassubstitut) produziert. Kommt es zu einer Störung im stromabwärtigen Teil des Brennstoffsystems, ist es möglich, die Poly-Generation-Anlage weiter zu betreiben, d.h. Vergaser und Gasbehandlung sind weiterhin in Betrieb. Außer Betrieb genommen wird in diesem Fall nur der Teil des Brennstoffsystems, in dem der Brennstoff üblicherweise konditioniert wird, d.h. stromabwärts liegende Systeme. Ohne das beschriebene Konzept wäre es nicht möglich, diesen Teil des Brennstoffsystems für Wartungszwecke o.ä. zu inertisieren, da Vergaser und Gasbehandlung noch in Betrieb sind. Auch bei möglichen Anfahrprozessen stellt sich dieses System als vorteilhaft dar. Das Anfahren des Vergasers eines IGCC-Kraftwerks kann mehrere Stunden dauern. Im Umkehrschluss kann es sein, dass für kürzere Wartungen an stromab liegenden Systemen der Vergaser nicht abgeschaltet werden soll. Auch für diesen Fall ist eine unabhängige Inertisierung in Teilen des Brennstoffsystems vorteilhaft.

Vorteilhafter Weise mündet die Spülleitung zwischen Vergasungseinrichtung und einer Mischvorrichtung, die stromauf des Sättigers für die Zuführung von Stickstoff zum Synthesegas in die Gasleitung geschaltet ist, in die Gasleitung.

Weiterhin vorteilhaft ist es, wenn eine Entschwefelungsanlage stromauf der Stelle in die Gasleitung geschaltet ist, an der die Spülleitung in die Gasleitung mündet.

Durch diese Wahl der Einmündung zwischen der Entschwefelungsanlage und der Mischvorrichtung erreicht man eine Spülung für alle an der Brennstoffkonditionierung beteiligten Komponenten, ohne den Prozess der Brennstoffreinigung unterbrechen zu müssen.

Zweckmäßiger Weise ist die Spülleitung mit einem Rein-Stickstoff-Ausgang einer Luftzerlegungsanlage (LZA) verbunden, die den Sauerstoff für die Vergasung liefert, wobei auch Stickstoff anfällt. Die Verbindung der Spülleitung mit dem Rein-Stickstoff-Ausgang der LZA kann direkt oder über weitere Leitungen erfolgen, beispielsweise über eine von der LZA kommende Zufuhrleitung für Stickstoff und, falls neben der Spülleitung noch weitere Spülleitungen vorgesehen sind, über eine Hauptspülleitung, von der die Spülleitung und die weiteren Spülleitungen abzweigen.

Vorteilhafter Weise ist ein Stickstoffzwischenspeicher zwischen die Zufuhrleitung und die Hauptspülleitung geschaltet. Durch die Zwischenspeicherung wird eine Spülung auch bei Ausfall des Bereitstellungs-Systems, also z.B. der Luftzerlegungsanlage, für das Inertmedium gewährleistet.

Weiterhin vorteilhaft ist es, wenn in die Zufuhrleitung eine Reserveleitung mündet, die eingangsseitig an ein Notbefüllsystem für Stickstoff, insbesondere für Rein-Stickstoff, angeschlossen ist. Hierdurch ist auch beim Ausfall der Luftzerlegungsanlage eine Spülung des Brennstoffsystems mit Stickstoff, insbesondere Rein-Stickstoff, besonders zuverlässig gewährleistet.

Es ist vorteilhaft, wenn zwischen Sättiger und Brennkammer ein Gasschloss in die Gasleitung geschaltet ist und eine weitere Spülleitung zwischen Gasschloss und Brennkammer, insbesondere unmittelbar stromab der Gasschlossarmatur, in die Gasleitung mündet. Auf diese Weise ist durch eine weitere Maßnahme eine zuverlässige Spülung des Brennstoffsystems zwischen der Gasschlossarmatur und der Brennkammer gewährleistet. Soll nur der letzte Teil der Gasleitung gespült werden, fallen so die erforderlichen Spülmengen besonders gering aus, wodurch sich der Betrieb der Anlage besonders wirtschaftlich gestaltet.

Zweckmäßiger Weise zweigt die weitere Spülleitung von der Hauptspülleitung ab.

Bezüglich des Verfahrens zum Spülen zumindest eines Teils des Brennstoffsystems einer Gas- und Dampfturbinenanlage wird die Aufgabe erfindungsgemäß dadurch gelöst, dass das Brennstoffsystem durch Einleiten eines Spülmediums zwischen Vergaser und Sättiger in die Gasleitung in Richtung der Brennkammer gespült wird.

Vorteilhafter Weise ist das Spülmedium Rein-Stickstoff. Eine Spülung mit Stickstoff ist aufgrund des geringen zu spülenden Volumens wirtschaftlich. Weiter muss dabei der Dampfturbinenanlage kein Dampf für den Spülvorgang entzogen werden, wodurch der Gesamtwirkungsgrad der Gas- und Dampfturbinenanlage besonders hoch ausfällt. Zusätzlich entfällt die Verwendung hochlegierter Stähle, da keine oder nur geringfügige Korrosionserscheinungen auftreten können.

Zweckmäßiger Weise wird der Rein-Stickstoff einer Luftzerlegungsanlage entnommen, die ohnehin für die Bereitstellung von Sauerstoff für die Vergasung benötigt wird.

Vorteilhafter Weise wird das Spülmedium zwischen einer in die Gasleitung geschalteten Mischvorrichtung, die dem Beimischen von Stickstoff zum Brennstoff dient, und einer Synthesegasreinigung zugeführt, so dass die Brennstoffkonditionierung unabhängig von der Brennstoffreinigung gespült werden kann. Wie oben beschrieben ist dies bei Poly-Generation-Anlagen besonders interessant, bei denen Vergaser und Gasbehandlung weiterhin in Betrieb sein können, während das Brennstoffsystem und die stromab liegende Systeme außer Betrieb genommen werden.

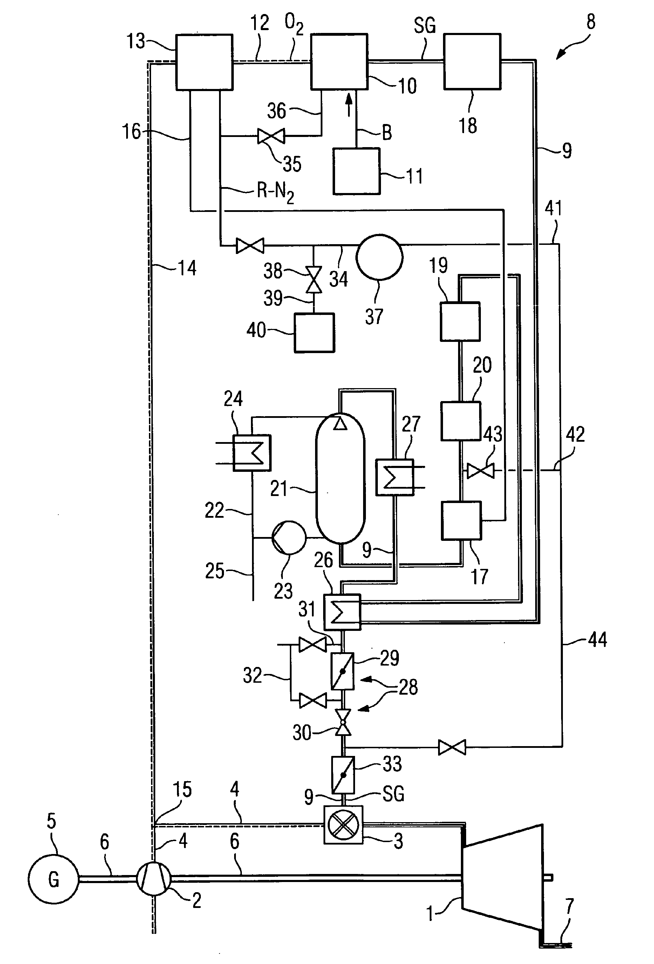

Die Erfindung wird beispielhaft anhand der Zeichnung näher erläutert. Es zeigt schematisch und nicht maßstäblich:
- Figur: einen Gasturbinenanlagenteil einer Gas- und Dampfturbinenanlage, wobei der Gasturbine eine Vergasungseinrichtung vorgeschaltet ist.

Eine Gas- und Dampfturbinenanlage umfasst eine Gasturbinenanlage gemäß der Figur und eine Dampfturbinenanlage (nicht gezeigt). Die Gasturbinenanlage umfasst eine Gasturbine 1 mit angekoppeltem Luftverdichter 2 und eine der Gasturbine 1 vorgeschaltete Brennkammer 3, die an eine Druckluftleitung 4 des Verdichters 2 angeschlossen ist. Die Gasturbine 1 und der Luftverdichter 2 sowie ein Generator 5 sitzen auf einer gemeinsamen Welle 6. Zum Zuführen von in der Gasturbine 1 entspanntem Arbeitsmittel oder Rauchgas in den Abhitzedampferzeuger der Dampfturbinenanlage ist eine Abgasleitung 7 an einen Ausgang der Gasturbine 1 angeschlossen.

Die Gasturbinenanlage ist für den Betrieb mit einem vergasten Rohgas oder Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Hierzu umfasst die Gasturbinenanlage ein Brennstoffsystem 8, über das der Brennkammer 3 der Gasturbine 1 Synthesegas zuführbar ist. Das Brennstoffsystem 8 umfasst eine Gasleitung 9, die eine Vergasungseinrichtung 10 mit der Brennkammer 3 der Gasturbine 1 verbindet. Der Vergasungseinrichtung 10 ist über ein Eintragssystem 11 Kohle, Erdgas oder Öl als fossiler Brennstoff B zuführbar. Weiterhin umfasst das Brennstoffsystem 8 Komponenten, die zwischen der Vergasungseinrichtung 10 und der Brennkammer 3 der Gasturbine 1 in die Gasleitung 9 geschaltet sind.

Zur Bereitstellung des für die Vergasung des fossilen Brennstoffs B benötigten Sauerstoffs O₂ ist der Vergasungseinrichtung 10 über eine Sauerstoffleitung 12 eine dem Brennstoffsystem 8 zugehörige Luftzerlegungsanlage 13 vorgeschaltet. Die Luftzerlegungsanlage 13 ist eingangsseitig mit Luft beaufschlagbar. Dazu ist die Luftzerlegungsanlage 13 eingangsseitig an eine Entnahmeluftleitung 14 angeschlossen, die an einer Zweigstelle 15 von der Druckluftleitung 4 abzweigt.

Ein Teil des in der Luftzerlegungsanlage 13 bei der Zerlegung des Luftstroms zusätzlich zum Sauerstoff O₂ gewonnenen Stickstoffs N₂, der sogenannte unreine Stickstoff U-N₂, wird über eine an die Luftzerlegungsanlage 13 angeschlossene Stickstoffleitung 16 einer Mischvorrichtung 17 zugeführt. In der Mischvorrichtung 17 wird der Unrein-Stickstoff U-N₂ dem Synthesegas SG zur Verringerung der NOₓ-Emissionen der Gasturbine zugemischt. Die Mischvorrichtung 17 ist dabei für eine besonders gleichförmige und strähnenfreie Vermischung des Stickstoffs N₂ mit dem Synthesegas SG ausgebildet.

Das von der Vergasungseinrichtung 13 abströmende Synthesegas SG gelangt über die Gasleitung 9 zunächst in einen Synthesegas-Abhitzedampferzeuger 18, in dem durch Wärmetausch mit einem Strömungsmedium eine Abkühlung des Synthesegases SG erfolgt.

In Strömungsrichtung des Synthesegases SG gesehen hinter dem Synthesegas-Abhitzedampferzeuger 18 und vor der Mischvorrichtung 17 sind in die Gasleitung 9 eine Entstaubungseinrichtung 19 für das Synthesegas SG sowie eine Entschwefelungsanlage 20 geschaltet. In alternativer Ausgestaltung kann anstelle der Entstaubungseinrichtung 19, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 3 ist eine Beladung des vergasten Brennstoffs mit Wasserdampf vor Eintritt in die Brennkammer 3 vorgesehen. Diese kann in wärmetechnisch besonders vorteilhafter Weise in einem Sättigersystem erfolgen. Dazu ist in die Gasleitung 9 ein Sättiger 21 geschaltet, in dem der vergaste Brennstoff im Gegenstrom zu aufgeheiztem Sättigerwasser geführt ist. Das Sättigerwasser zirkuliert dabei in einem an den Sättiger 21 angeschlossenen Sättigerkreislauf 22, in den eine Umwälzpumpe 23 sowie zur Vorheizung des Sättigerwassers ein Wärmetauscher 24 geschaltet sind. Zum Ausgleich der bei der Sättigung des vergasten Brennstoffs auftretenden Verluste an Sättigerwasser ist an den Sättigerkreislauf 22 eine Einspeiseleitung 25 angeschlossen.

In Strömungsrichtung des Synthesegases SG gesehen hinter dem Sättiger 21 ist in die Gasleitung 9 sekundärseitig ein als Synthesegas-Mischgas-Wärmetauscher wirkender Wärmetauscher 26 geschaltet. Der Wärmetauscher 26 ist dabei primärseitig an einer Stelle vor der Entstaubungseinrichtung 19 ebenfalls in die Gasleitung 9 geschaltet, so dass das der Entstaubungseinrichtung 19 zuströmende Synthesegas SG einen Teil seiner Wärme auf das aus dem Sättiger 21 abströmende Synthesegas SG überträgt. Die Führung des Synthesegases SG über den Wärmetauscher 26 vor Eintritt in die Entschwefelungsanlage 20 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt synthesegasseitig stromab der Rußwäscheeinrichtung angeordnet sein.

Zwischen den Sättiger 21 und den Wärmetauscher 26 ist in die Gasleitung 9 sekundärseitig ein weiterer Wärmetauscher 27 geschaltet, der primärseitig speisewasserbeheizt oder auch dampfbeheizt sein kann. Durch den als Synthesegas-Reingas-Wärmetauscher ausgebildeten Wärmetauscher 26 und den Wärmetauscher 27 ist dabei eine besonders zuverlässige Vorwärmung des der Brennkammer 3 der Gasturbine 1 zuströmenden Synthesegases SG auch bei verschiedenen Betriebszuständen der Gas- und Dampfturbinenanlage gewährleistet.

Beim Abfahren des Brennstoffsystems 8 ist eine Spülung erforderlich. Dies erfolgt nach dem Stand der Technik in der Weise, dass in einem oder mehreren Schritten ein erster und ein zweiter Bereich des Brennstoff-Vergasungssystems 8 separat mit Stickstoff gespült werden. Das Vergasungssystem (erster Bereich) und das Gasturbinen-Brennstoffsystem (zweiter Bereich) sind dabei durch ein Gasschloss 28 voneinander getrennt. Das Vergasungssystem umfasst dabei die Vergasungseinrichtung 10 bis zum Gasschloss 28 und das Gasturbinen-Brennstoffsystem umfasst das Gasschloss 28 und die nachgeschalteten Komponenten bis zur Brennkammer 3 der Gasturbine 1.

Das Gasschloss 28 ist nach dem Wärmetauscher 26 in der Gasleitung 9 angeordnet. Das Gasschloss 28 umfasst eine in der Gasleitung 9 angeordnete Schnellschlussarmatur 29, der unmittelbar eine als Kugelhahn ausgeführte Gasschlossarmatur 30 nachgeschaltet ist. Über die Abgasleitung 31 stromauf der Gasschlossarmatur 29 wird Restgas beim Spülen nach Abschalten der Vergasungseinrichtung oder beim Spülen des Sättigers und nachgeschalteten Wärmetauschers zu einer Fackel abgeführt. Die Abgasleitung 31 mit zugehöriger Armatur dient als Druckentlastungssystem 32 des Gasschlosses 28. Über das Gasschloss 28 ist die Gasleitung 9 gasdicht absperrbar und bei Bedarf über die Schnellschlussarmatur 29 in besonders kurzer Zeit verschließbar.

Dem Gasschloss 28 ist unmittelbar eine in die Gasleitung 9 geschaltete Regelarmatur 33, nachgeschaltet, über die der Brennstoffstrom zur Gasturbine in allen Lastfällen geregelt wird.

Zur Spülung des Vergasungssystems oder des ersten Bereichs des Brennstoffsystems mit Stickstoff N₂, also von der Vergasungseinrichtung 10 bis zum Gasschloss 28, ist Rein-Stickstoff R-N₂ aus der Luftzerlegungsanlage 13 vorgesehen. Hierzu wird der in der Luftzerlegungsanlage 13 bei der Zerlegung des Luftstroms L zusätzlich zum Sauerstoff O₂ erzeugte Stickstoff N₂ als Rein-Stickstoff R-N₂ über eine Zufuhrleitung 34 aus der Luftzerlegungsanlage 13 abgeführt. Von der Zufuhrleitung 34 zweigt eine mit einem Ventil 35 absperrbare Zweigleitung 36 ab, die zum Spülen des ersten Bereichs des Brennstoffsystems 8 in die Vergasungseinrichtung 10 für fossilen Brennstoff B mündet.

Es ist bekannt, zur Spülung des zweiten Bereichs oder des Gasturbinen-Brennstoffsystems 8 mit Stickstoff N₂ als Spülmedium ebenfalls Rein-Stickstoff R-N₂ vorzusehen. Hierzu mündet die Zufuhrleitung 34 in einen Stickstoffspeicher 37. In die Zufuhrleitung 34 mündet zusätzlich eine mit einem Ventil 38 absperrbare Reserveleitung 39, die eingangsseitig an ein Notbefüllsystem 40 für Rein-Stickstoff R-N₂ angeschlossen ist. Dadurch, dass der Stickstoffspeicher 37 sowohl an die Luftzerlegungsanlage 13 als auch an das Notbefüllsystem 40 angeschlossen ist, kann er sowohl mit Rein-Stickstoff R-N₂ aus der Luftzerlegungsanlage 13 als auch mit Rein-Stickstoff R-N₂ aus dem Notbefüllsystem 40 beschickt werden. Dadurch ist auch bei einem Ausfall der Luftzerlegungsanlage 13 eine Spülung des Vergasungssystems 8 besonders zuverlässig gewährleistet. Der Stickstoffspeicher 37 ist dabei so dimensioniert, dass er den Bedarf an Rein-Stickstoff R-N₂ für den Spülvorgang einschließlich ausreichend hoher Reservekapazität abdeckt. Der Stickstoffspeicher 37 ist ausgangsseitig über eine Hauptspülleitung 41 und eine weitere Spülleitung 44 an die Gasleitung 9 angeschlossen. Die Einmündung der weiteren Spülleitung 44 in die Gasleitung 9 erfolgt stromab in Strömungsrichtung des Synthesegases SG unmittelbar nach dem Gasschloss 28, also nach der Gasschlossarmatur 30.

Bei jedem Umlasten der Gasturbine 1 von Synthesegas SG auf Zweitbrennstoff, was einem Wechsel des der Brennkammer 3 zugeführten Brenngases entspricht, ist eine Spülung des Gasturbinen-Brennstoffsystems 8 mit Stickstoff vorgesehen. Durch den Spülvorgang muss das sich im Gasturbinen-Brennstoffsystem befindliche Synthesegas SG aus sicherheitstechnischen Gründen annähernd vollständig verdrängt werden.

Zur Spülung des ersten Bereichs des Brennstoffsystems 8 oder des Vergasungssystems mit Rein-Stickstoff R-N₂ wird über die Zufuhrleitung 34 und die Zweigleitung 36 in die Vergasungseinrichtung 10 Rein-Stickstoff R-N₂ eingespeist. Hierbei ist üblicherweise eine Vorwärtsspülung des Bereichs zwischen der Vergasungseinrichtung 10 und dem Gasschloss 28 mit ausreichend großen Mengen von Rein-Stickstoff R-N₂ als Spülmedium über einen längeren Zeitraum vorgesehen, um eine Verdrängung des Synthesegases SG aus diesem Bereich des Brennstoffsystems 8 zu gewährleisten. Das Abgas des Spülvorgangs wird über die Abgasleitung 31 stromauf des Gasschlosses 28 aus dem Brennstoffsystem 8 abgeführt.

Das Brennstoffsystem zwischen dem Gasschloss 28 und der Brennkammer 3 der Gasturbine 1 wird mit Rein-Stickstoff R-N₂ in Vorwärtsrichtung gespült. Hierzu wird der in der Luftzerlegungsanlage 13 erzeugte Rein-Stickstoff R-N₂ über die Stickstoffleitung 41 und die weitere Spülleitung 44 der Gasleitung 9 zugeführt. Aufgrund des geringen Volumens dieses Systems ist eine Vorwärtsspülung mit Rein-Stickstoff R-N₂ ausreichend.

Sind Vergaser und Gasbehandlung (noch) in Betrieb, z.B. weil es sich bei der Anlage um eine Poly-Generation-Anlage handelt oder wird der Vergaser gerade angefahren, was mehrere Stunden dauern kann, oder soll für kürzere Wartungen an stromab liegenden Systemen der Vergaser nicht abgeschaltet werden, fällt die Möglichkeit der Spülung über den Vergaser weg.

Erfindungsgemäß wird dann ein "Notspülen" des stromab des Vergasers angeordneten Brennstoffsystems aktiviert und über eine bestimmte Zeit durchgeführt, mit der eine Inertisierung des Brennstoffsystems auch oberhalb des Gasschlosses erreicht wird.

Hierzu wird Rein-Stickstoff über die Hauptspülleitung 41 und die mit einem Ventil 43 absperrbare Spülleitung 42 der Gasleitung 9 zwischen der Mischvorrichtung 17 und der Entschwefelungsanlage 20 zugeführt. Eine Spülung mit Unrein-Stickstoff über die Stickstoffleitung 16 direkt in die Mischvorrichtung 17 erfüllt wegen des zu hohen Sauerstoffanteils des Unrein-Stickstoffs nicht denselben Zweck. Auch eine Einspeisung von Rein-Stickstoff ab der Luftzerlegungsanlage 10 direkt in die Stickstoffleitung 16 für Unrein-Stickstoff ist nicht sinnvoll, da nicht wirtschaftlich. Diese Variante wäre zeitaufwändiger und verbrauchte mehr Rein-Stickstoff, da die gesamte Stickstoffleitung 16 erst einmal selbst gespült werden müsste.

## Patentansprüche

1. Gas- und Dampfturbinenanlage mit integrierter Kohlevergasung, umfassend eine Gasturbine (1), ein einer Brennkammer (3) der Gasturbine (1) vorgeschaltetes Brennstoffsystem (8), das eine Vergasungseinrichtung (10) für fossilen Brennstoff und eine von der Vergasungseinrichtung (10) abzweigende und in die Brennkammer (3) der Gasturbine (1) mündende Gasleitung (9) umfasst, wobei stromauf der Brennkammer (3) ein Sättiger (21) für das Aufsättigen des Brennstoffs mit Dampf in die Gasleitung (9) geschaltet ist, **dadurch gekennzeichnet, dass** eine Spülleitung (42) vorgesehen ist, die zwischen Vergasungseinrichtung (10) und Sättiger (21) in die Gasleitung (9) mündet.

2. Gas- und Dampfturbinenanlage nach Anspruch 1, wobei stromauf des Sättigers (21) eine Mischvorrichtung (17) für die Zuführung von Stickstoff zum Synthesegas in die Gasleitung (9) geschaltet ist, wobei die Spülleitung (42) zwischen Vergasungseinrichtung (10) und Mischvorrichtung (17) in die Gasleitung (9) mündet.

3. Gas- und Dampfturbinenanlage nach einem der vorhergehenden Ansprüche, wobei eine Entschwefelungsanlage (20) stromauf der Stelle in die Gasleitung (9) geschaltet ist, an der die Spülleitung (42) in die Gasleitung (9) mündet.

4. Gas- und Dampfturbinenanlage nach einem der vorhergehenden Ansprüche, wobei die Spülleitung (42) über eine Hauptspülleitung (41) und eine Zufuhrleitung (34) mit einem Rein-Stickstoff-Ausgang einer Luftzerlegungsanlage (13) verbunden ist.

5. Gas- und Dampfturbinenanlage nach Anspruch 4, wobei ein Stickstoffzwischenspeicher (37) zwischen die Zufuhrleitung (34) und die Hauptspülleitung (41) geschaltet ist.

6. Gas- und Dampfturbinenanlage nach einem der Ansprüche 4 oder 5, wobei in die Zufuhrleitung (34) eine Reserveleitung (39) mündet, die eingangsseitig an ein Notbefüllsystem (40) für Stickstoff, insbesondere für Rein-Stickstoff, angeschlossen ist.

7. Gas- und Dampfturbinenanlage nach einem der vorhergehenden Ansprüche, wobei zwischen Sättiger (21) und Brennkammer (3) ein Gasschloss (28) in die Gasleitung (9) geschaltet ist und eine weitere Spülleitung (44) zwischen Gasschloss (28) und Brennkammer (3) in die Gasleitung (9) mündet.

8. Gas- und Dampfturbinenanlage nach Anspruch 7, wobei die weitere Spülleitung (44) von der Hauptspülleitung (41) abzweigt.

9. Verfahren zum Spülen zumindest eines Teils eines Brennstoffsystems (8) einer Gas- und Dampfturbinenanlage mit integrierter Vergasung, wobei das Brennstoffsystem (8) einen Vergaser (10) umfasst, von dem eine Gasleitung (9) abzweigt, die in eine Brennkammer (3) mündet und wobei das Brennstoffsystem (8) weiterhin einen Sättiger (21) umfasst, der in die Gasleitung (9) geschaltet ist, **dadurch gekennzeichnet, dass** das Brennstoffsystem (8) durch Einleiten eines Spülmediums zwischen Vergaser (10) und Sättiger (21) in die Gasleitung (9) in Richtung der Brennkammer (3) gespült wird.

10. Verfahren nach Anspruch 9, wobei das Spülmedium Rein-Stickstoff ist.

11. Verfahren nach Anspruch 10, wobei der Rein-Stickstoff einer Luftzerlegungsanlage (13) entnommen wird.

12. Verfahren nach einem der Ansprüche 9 bis 11, wobei das Spülmedium zwischen einer in die Gasleitung (9) geschalteten Mischvorrichtung (17), die dem Beimischen von Stickstoff zum Brennstoff dient, und einer Entschwefelungsanlage (20) zugeführt wird.

## Claims

1. Combined cycle power plant with integrated coal gasification, comprising a gas turbine (1), a fuel system (8) connected upstream of a combustion chamber (3) of the gas turbine (1), which comprises a gasification device (10) for fossil fuel and a gas line (9) branching off from the gasification device (10) and opening into the combustion chamber (3) of the gas turbine (1), with a saturator (21) for the saturation of the fuel, wherein steam is connected upstream of the combustion chamber (3) into the gas line (9), **characterised in that** a flushing line (42) is provided which opens into the gas line (9) between gasification device (10) and saturator (21).

2. Combined cycle power plant according to claim 1, wherein upstream of the saturator (21) a mixing facility (17) for supply of nitrogen to the syngas is connected into the gas line (9), wherein the flushing line (42) opens out between gasification device (10) and mixing facility (17) into the gas line (9).

3. Combined cycle power plant according to one of the preceding claims, wherein a desulphurisation plant (20) is connected upstream of the point in the gas line (9) at which the flushing line (42) opens into the gas line (9).

4. Combined cycle power plant according to one of the preceding claims, wherein the flushing line (42) is connected via a main flushing line (41) and a feed line (34) to a pure nitrogen outlet of an air separation system (13).

5. Combined cycle power plant according to claim 4, wherein an intermediate nitrogen store (37) is connected between the feed line (34) and the main flushing line (41).

6. Combined cycle power plant according to one of claims 4 or 5, wherein a reserve line (39) opens into the feed line (34), which is connected on its input side to an emergency filling system (40) for nitrogen, especially for pure nitrogen.

7. Combined cycle power plant according to one of the preceding claims, wherein a gas lock (28) is connected into the gas line (9) between saturator (21) and combustion chamber (3) and a further flushing line (44) opens into the gas line (9) between gas lock (28) and combustion chamber (3).

8. Combined cycle power plant according to claim 7, wherein the further flushing line (44) branches off from the main flushing line (41).

9. Method for flushing out at least a part of a fuel system (8) of a combined cycle power plant with integrated gasification, wherein the fuel system (8) includes a gasifier (10) from which a gas line (9) branches off, which opens into a combustion chamber (3) and wherein the fuel system (8) further includes a saturator (21) which is connected into the gas line (9), **characterised in that** the fuel system (8) is flushed out by introduction of a flushing medium into the gas line (9) between gasifier (10) and saturator (21) in the direction of the combustion chamber (3).

10. Method according to claim 9, wherein the flushing medium is pure nitrogen.

11. Method according to claim 10, wherein the pure nitrogen is taken from an air separation system (13).

12. Method according to one of claims 9 to 11, wherein the flushing medium is supplied between a mixing facility (17) connected into the gas line (9) which is used for mixing nitrogen into the fuel, and a sulphur removal system (20).

## Revendications

1. Installation de turbine à gaz et de turbine à vapeur à gazéification intégrée du charbon, comprenant une turbine ( 1 ) à gaz, un système ( 8 ) à combustible monté en amont d'une chambre ( 3 ) de combustion de la turbine ( 1 ) à gaz et comprenant un dispositif ( 10 ) de gazéification de combustible fossile et un conduit ( 9 ) pour du gaz bifurquant du dispositif ( 10 ) de gazéification et débouchant dans la chambre de combustion ( 3 ) de la turbine ( 1 ) à gaz, dans laquelle en amont de la chambre de combustion ( 3 ) est monté, dans le conduit ( 9 ) pour du gaz, un saturateur ( 21 ) pour la saturation du combustible en vapeur, **caractérisée en ce qu'**il est prévu un conduit ( 42 ) de lavage, qui débouche dans le conduit ( 9 ) pour du gaz entre le dispositif ( 10 ) de gazéification et le saturateur ( 21 ).

2. Installation de turbine à gaz et de turbine à vapeur suivant la revendication 1, dans laquelle un dispositif ( 17 ) de mélange pour l'envoi d'azote au gaz de synthèse est monté dans le conduit ( 9 ) pour du gaz en amont du saturateur ( 21 ), le conduit ( 42 ) de lavage débouchant dans le conduit ( 9 ) pour du gaz entre le dispositif ( 10 ) de gazéification et le dispositif ( 17 ) de mélange.

3. Installation de turbine à gaz et de turbine à vapeur suivant l'une des revendications précédentes, dans laquelle une installation ( 20 ) de désulfuration est montée en amont du point dans le conduit ( 9 ) pour du gaz où le conduit ( 12 ) de lavage débouche dans le conduit ( 9 ) pour du gaz.

4. Installation de turbine à gaz et de turbine à vapeur suivant l'une des revendications précédentes, dans laquelle le conduit ( 42 ) de lavage communique avec une sortie d'azote pure d'une installation ( 13 ) de fractionnement d'air par un conduit ( 41 ) de lavage principal et par un conduit ( 34 ) d'amenée.

5. Installation de turbine à gaz et de turbine à vapeur suivant la revendication 4, dans laquelle un réservoir ( 37 ) intermédiaire d'azote est monté entre le conduit ( 34 ) d'amenée et le conduit ( 41 ) de lavage principal.

6. Installation de turbine à gaz et de turbine à vapeur suivant l'une des revendications 4 ou 5, dans laquelle dans le conduit ( 34 ) d'amenée débouche un conduit ( 39 ) de réserve, qui communique du côté de l'entrée, avec un système ( 40 ) de remplissage d'urgence pour de l'azote, notamment, pour de l'azote pur.

7. Installation de turbine à gaz et de turbine à vapeur suivant l'une des revendications précédentes, dans laquelle une fermeture ( 28 ) à gaz est montée dans le conduit ( 9 ) pour du gaz entre le saturateur ( 21 ) et la chambre de combustion ( 3 ) et un autre conduit ( 44 ) de lavage débouche dans le conduit ( 9 ) pour du gaz entre la fermeture ( 28 ) à gaz et la chambre de combustion ( 3 ).

8. Installation de turbine à gaz et de turbine à vapeur suivant la revendication 7, dans laquelle l'autre conduit ( 44 ) de lavage bifurque du conduit ( 41 ) de lavage principal.

9. Procédé de lavage d'au moins une partie d'un système ( 8 ) à combustible d'une installation de turbine à gaz et de turbine à vapeur à gazéification intégrée, le système ( 8 ) à combustible comprenant un gazogène ( 10 ), dont bifurque un conduit ( 9 ) pour du gaz, lequel débouche dans une chambre de combustion ( 3 ) et dans lequel le système ( 8 ) à combustible comprend en outre un saturateur ( 21 ) qui est monté dans le conduit ( 9 ) pour du gaz, **caractérisé en ce que** le système ( 8 ) à combustible est lavé par envoi d'un fluide de lavage entre le gazogène ( 10 ) et le saturateur ( 21 ) dans le conduit ( 9 ) pour du gaz en direction de la chambre de combustion ( 3 ).

10. Procédé suivant la revendication 9, dans lequel le fluide de lavage est de l'azote pur.

11. Procédé suivant la revendication 10, dans lequel l'azote pur est prélevé d'une installation ( 13 ) de fractionnement de l'air.

12. Procédé suivant l'une des revendications 9 à 11, dans lequel le fluide de lavage est amené entre un dispositif ( 17 ) de mélange, qui est monté dans le conduit ( 9 ) pour du gaz et qui sert à mélanger de l'azote au combustible, et une installation ( 20 ) de désulfuration.
